# EUROPÄISCHE PATENTANMELDUNG

(11) **EP 0 681 862 A2**
(43) Veröffentlichungstag der Anmeldung: **15.11.1995**
(21) Anmeldenummer: 95106229.8
(22) Anmeldetag: 26.04.1995
(51) Int. Cl.: B01D 67/00, B01D 69/12, B01D 71/70, B01D 61/36, B01D 69/10, B01D 53/22, B05D 1/20

(54) **Verbundmembran und Verfahren zu ihrer Herstellung**

(30) Priorität: 09.05.1994 DE 4416330
(71) Anmelder: HOECHST AKTIENGESELLSCHAFT, D-65929 Frankfurt am Main (DE)
(72) Erfinder: Scheunemann, Ude, Dr., D-65835 Liederbach (DE); Althoff, Olaf, Dr., D-65812 Bad Soden (DE); Hickel, Werner, Dr., D-67061 Ludwigshafen (DE); Appel, Gunther, D-65795 Hattersheim (DE); Bauer, Jacqueline, D-61440 Oberursel (DE); Geiss, Gerhard, D-65875 Liederbach (DE)

(57) **Zusammenfassung**

Zur Herstellung einer Verbundmembran spreitet man die Lösung eines Polymeren in einem flüchtigen organischen Lösungsmittel auf Wasser, läßt das Lösungsmittel verdunsten, vernetzt das Polymere und überträgt den entstehenden Polymer-Film auf eine poröse Trägermembran.

Das Polymere ist vorzugsweise ein Polysiloxan, das man über polymergebundene OH-Gruppen vernetzt. Die Verbundmembran ist u.a. geeignet für die Pervaporation.

## Beschreibung

Die Erfindung betrifft eine Verbundmembran bestehend aus einer porösen Trägerschicht und einer darauf aufgebrachten vernetzten Polymerschicht sowie ein Verfahren zu ihrer Herstellung und ihre Verwendung.

Verfahren zur Trennung von Mehrstoffsystemen mittels Membranen haben in den letzten Jahren an Bedeutung gewonnen. Dies gilt auch für nichtporöse Membranen, bei denen der Stofftransport durch unterschiedliches chemisches Potential zwischen Feed- und Permeatraum bewirkt wird. Nichtporöse Membranen finden in vielen technischen Bereichen Anwendung wie z.B. Dialyse, Umkehrosmose, Pervaporation, Dampfpermeation oder Gastrennung. Membranen zur Gastrennung werden z.B. zur Sauerstoffanreicherung von Luft, zur Trennung von Methan und Kohlendioxid oder zur Stickstoffanreicherung aus Luft verwendet.

Wünschenswert sind Membranen mit hoher Durchlässigkeit und hoher Selektivität. Ein prinzipielles Problem ist, daß man häufig ein gegenläufiges Verhältnis von Durchlässigkeit und Selektivität findet. Die Selektivität ist eine Materialeigenschaft, während die Durchlässigkeit der Membran durch Permeationskoeffizient und Schichtdicke bestimmt wird. Materialien mit hoher Selektivität haben nur geringe Permeationskoeffizienten, andere haben hohe Permeationskoeffizienten bei geringer Selektivität. Häufig wählt man nun ein Material guter Selektivität und versucht eine möglichst dünne Membranschicht herzustellen. Diese dünne Membranschicht wird auf eine poröse Stützmembran oder auf eine poröse Stützmembran mit hochpermeabler Zwischenschicht aufgebracht.

So wird z.B. in Japan Tokkyo Koho JP 63240917 eine Zwei-Schicht-Verbundmembran zur Gastrennung beschrieben, die eine poröse Stützmembran (A) aus einem Polysulfon und eine selektive, dünne Deckschicht (C) aus einem Copolymer von Tetrafluorethylen und einem vinylgruppenenthaltenden Silan enthält.

Um eine genügend hohe Durchlässigkeit zu erreichen, ist es üblich, diese Deckschicht ultradünn aufzubringen. Eine solche ultradünne Schicht läßt sich auf einem porösen Träger jedoch nur selten defektfrei aufbringen. Ein weiterer Nachteil eines solchen Schichtaufbaus ist, daß die wirksame Fläche der selektiven Schicht auf den Flächenanteil der Poren in der porösen Stützmembran beschränkt ist und damit die Durchlässigkeit gering ist.

Anders ist es, wenn man zusätzlich eine nicht poröse Zwischenschicht aus einem Material hoher Permeabilität verwendet. Einerseits lassen sich hierauf sehr dünne Filme realisieren, andererseits läßt sich durch die Wirkung der Zwischenschicht als Gutter-Layer die effektive Lochfläche erhöhen und damit steigt die Durchlässigkeit der Kompositmembran. In DE-OS 34 15 624 wird eine solche Verbundmembran zur Gastrennung mit einer Dreischichtstruktur beschrieben. Sie besteht im einzelnen aus einem porösen Trägermaterial (A) einer hochpermeablen Zwischenschicht (B) und darauf aufgebracht einer selektiven Deckschicht (C). Die Schicht (B) kann unter anderem eine hochpermeable vernetzte oder unvernetzte Polyorganosiloxan-Schicht sein. Zur Erzeugung der Polysiloxanschicht kann man das Polysiloxan in einem organischen Lösemittel auflösen und die erhaltene verdünnte Lösung direkt auf die poröse Stützmembran aufbringen und trocknen.

Diese Variante hat den Nachteil, daß beim Aufbringen der Flüssigkeit auf den porösen Träger die Flüssigkeit in die Poren hineinläuft und somit die Durchlässigkeit der Membran stark herabgesetzt wird. Nach einer zweiten angegebenen Variante wird die Lösung auf der Wasseroberfläche ausgebreitet und eine dünne Schicht aus Polysiloxan erzeugt, die auf die poröse Stützmembran aufgebracht wird. Bei dieser Variante ist nach Beobachtungen der Anmelderin ein Hineinlaufen des Schichtmaterials in die Poren nicht ausgeschlossen, sofern die Schicht nicht vernetzt wurde.

Die Vernetzung findet üblicherweise in der mit dem Trägermaterial verbundenen Membran statt. Gemäß JA-83-092430 erfolgt die Vernetzung durch Erhitzen der Polysiloxanmembran auf dem Träger.

Eine Möglichkeit für die Erzeugung der Schicht bietet das sogenannte Water-Casting-Verfahren, das z.B. in US Pat. 4,279,855 beschrieben ist. Hierbei wird eine Lösung des Schichtmaterials auf eine Wasseroberfläche gespreitet. Nach dem Verdunsten des Lösungsmittels bildet sich ein ultradünner fester Film, der auf die poröse Trägermembran auflaminiert werden kann. Filme, die allein aufgrund des Verdampfen des Lösungsmittels fest werden, sind allerdings häufig aufgrund der notwendigen Löslichkeit des filmbildenden Materials auch nach dem Trocknen nicht genügend lösungsmittelstabil, was sich sowohl beim Aufbringen einer weiteren Schicht, wie auch beim späteren Einsatz der Membran störend auswirken kann.

Es bestand daher die Aufgabe, ein Verfahren zu finden, mit dem sich porenfreie Schichten hoher Gasdurchlässigkeit und hoher Beständigkeit gegen Lösungsmittel erzeugen lassen.

Mit der vorliegenden Erfindung können diese Anforderungen erfüllt werden. Es wurde nun ein Verfahren zur Herstellung einer Verbundmembran gefunden, das dadurch gekennzeichnet ist, daß man die Lösung eines Polymeren in einem flüchtigen organischen Lösungsmittel auf Wasser spreitet, man das Lösungsmittel verdunsten läßt, das Polymere vernetzt und den entstehenden Polymer-Film auf eine Trägermembran überträgt.

Bei diesem Verfahren werden die Poren des porösen Trägers nicht verstopft, andererseits ist die Schicht nach dem Aufbringen vernetzt und somit genügend lösungsmittelstabil.

Weiterhin ist es möglich, daß man die auf der Wasseroberfläche vernetzte Polymerschicht als gleichmäßige Deckschicht auf ene dichte Membran aufbringt, so daß sie als Schutzschicht für die darunterliegende Oberflächenschicht dienen kann und sie vor z.B. mechanischen Beschädigungen schützt. Der Vorteil hierbei besteht darin, daß das Aufbringen der Deckschicht ohne organische Lösungsmittel erfolgt, wodurch eine Beschädigung der darunterliegenden Schicht durch Anlösen verhindert wird.

Polymere, die sich vernetzen lassen, sind z.B. Polykondensate wie Polyamide, die olefinische Doppelbindungen, z.B. in Form von Acrylat- oder Vinylgruppen enthalten und sich daher durch energiereiche Strahlung vernetzen lassen. Vernetzbare Polymere sind auch Polymere, die noch Hydroxylgruppen enthalten und daher mit Polyisocyanaten, Melaminharzen und Polyepoxyden reagieren.

Als Vernetzungsreaktion für Polyorganosiloxane wird häufig die Hydrosilylierung eingesetzt (Encyclopedia of Polymer Science and Technol., Vol. 15, John Wiley (1984)). Der hierfür benötigte Pt-Katalysator ist allerdings sehr empfindlich gegenüber Feuchtigkeit, so daß diese Reaktion mit dem Water-Casting-Verfahren nicht kombiniert werden kann.

Vorzugsweise ist das zu vernetzende Polymer ein Polysiloxan. Besonders bevorzugt ist es, wenn das Polysiloxan Hydroxylgruppen enthält und über polymergebundene OH-Gruppen vernetzt ist. Für das Verfahren der Spreitung auf der Wasseroberfläche wird vorzugsweise das Water-Casting-Verfahren eingesetzt.

Wesentlich für das erfindungsgemäße Verfahren ist, daß eine Reaktionslösung aus Polyorganosiloxan auf eine Wasseroberfläche gespreitet werden kann und nach dem Spreiten und Verdampfen des Lösungsmittels der Film auf der Wasseroberfläche aufgrund einer Vernetzungsreaktion genügend fest wird. Somit kann es auf eine porösen Trägermembran auflaminiert werden, ohne daß ein flüssiges Filmmaterial in die Poren der Trägermembran hineinläuft und sie verstopft.

Verwendbare Polymere sind ferner hydroxylgruppenhaltige Polymere, die sich durch di- oder multifunktionelle Isocyanate oder Melamine vernetzen lassen. Vernetzbare, fluorhaltige Copolymere sind beispielsweise in der europäischen Patentanmeldung 0 276 649 beschrieben. Es lassen sich weiterhin Polymere mit Doppelbindungen radikalisch vernetzen. Die Vernetzung kann hierbei durch Initiatoren oder UV-Licht ausgelöst werden.

Eine Möglichkeit bietet beispielsweise die Vernetzung eines olefinische Doppelbindungen, z.B. in Form von Acrylat- oder Methacrylat-Gruppen enthaltenden Polyorganosiloxans durch UV-Licht. Die Reaktion verläuft radikalisch. Eine hinreichend schnelle Vernetzungsreaktion kann man erreichen, wenn man die Atmosphäre über dem Film mit Inertgas überspült, um Sauerstoff auszuschließen. Die auf dem Wasser vernetzten Schichten können anschließend auf die Trägermembran übertragen werden und zeigen gute Gasdurchlässigkeit.

Überraschenderweise wurde auch gefunden, daß man mit Hilfe einer Kondensationsreaktion ein Polyorganosiloxan, das OH-Gruppen trägt, vernetzen kann. Hierzu wird die Lösung des Polyorganosiloxans und eines Vernetzers in einem flüchtigen organischen Lösemittel auf die Wasseroberfläche eines Beschichtungstroges gespreitet. Nach Verdampfen des Lösungsmittels verbleibt ein ultradünner defektfreier Film auf der Wasseroberfläche, der durch die einsetzende Kondensationsvernetzung hinreichend fest wird, so daß er nach bekannten Verfahren auf die poröse Trägermembran übertragen werden kann.

Das Prinzip der Kondensationsvernetzung von Polyorganosiloxanen mit polymergebundenen OH-Gruppen ist z.B. in Encyclopedia of Polymer Science and Engineering, Band 15, Abschnitt "Silicones", John Wiley, 1989 beschrieben.

Als Polyorganosiloxane mit OH-Gruppen kommen z.B. Polydimethylsiloxane, Polydiethylsiloxan, Polydimethyldiphenylsiloxan-copolymer, Polyorgano-Hydrosiloxan, Polyfluoroalkylsiloxan oder Polyvinylmethylsiloxan mit terminalen OH-Gruppen in Frage. Damit ein "Vernetzen" möglich ist, sollten die Polyorganosiloxane mindestens zwei Hydroxylgruppen im Molekül enthalten.

Als Vernetzer können Silane mit Acetoxy-, Alkoxy- oder Enoxy-Gruppen dienen. Es können auch Silane mit Aminogruppen eingesetzt werden. Ferner sind auch Mischungen von Vernetzern benutzbar. Besonders geeignet ist die Vernetzung mit einem Acetoxysilan, insbesondere Triacetoxysilan.

Zum Starten und Beschleunigen der Reaktion gibt es eine Vielzahl von Katalysatoren, insbesondere organische Amine, organische Metallsalze, vorzugsweise organische Zinnsalze. Bevorzugt ist der Einsatz von Dibutylzinndilaurat. Die eingesetzten Lösungsmittel sollen mit dem Reaktionsgemisch verträglich sein und ein gutes Spreitverhalten zeigen. Gut verwendbar sind z.B. Alkylacetate wie Butylacetat. Es können aber auch Gemische von Lösungsmitteln verwendet werden. Dem Lösungsmittelgemisch können auch Zusätze, z.B. zur Haftverbesserung oder zur Erhöhung der mechanischen Festigkeit, wie SiO₂-Partikel oder spezielle oberflächenaktive organische Siliziumverbindungen (z.B. Phenylmethylpolysiloxan oder Glycidoxypropyltriethoxysilan) dienen. Dies erhöht die Haftung einer nachfolgend aufgetragenen permselektiven Schicht.

Unter Umständen ist es vorteilhaft, zwischen dem Ansetzen und dem Aufspreiten der Reaktionslösung einen gewissen Zeitraum, z.B. 10 Minuten, verstreichen zu lassen. Eine völlige Vernetzung vor dem Aufspreiten soll jedoch nicht erfolgen, weil sonst keine Filmbildung mehr möglich ist. Man kann die Lösung aber auch direkt nach dem Zusammengeben der Komponenten aufspreiten.

Poröse Trägermembranen sind im Handel verfügbar. Sie können z.B. aus Polysulfon, Polypropylen, Polyethylen, Polyamid, Polyimid, Polyester, Polyacrylnitril oder anderen Polymeren bestehen. Ihre Porengröße liegt zwischen 2 und 5000 nm, bevorzugt zwischen 5 und 250 nm. Die poröse Membran kann dabei symmetrisch oder asymmetrisch sein. Ihre Durchlässigkeit für Sauerstoff soll größer als 2 m³ (STP)/m²h·bar sein.

Als Subphase kann man Wasser unterschiedlichster Qualität einsetzen, es kommt entmineralisiertes Wasser oder auch normales Leitungswasser in Frage. Man kann auch verschiedene Zusätze, wie z.B. Salze oder Zusätze zur Gefrierpunktserniedrigung begeben. Die Wassertemperatur kann dabei zwischen -10 und + 60°C liegen, bevorzugt 20 bis 50°C. Die Zeit zwischen Spreiten der Lösung und Übertragen des Films auf den Träger kann zwischen 2 Sekunden und 5 Minuten betragen. Man kann den Film bereits nach kurzer Verweilzeit auf dem Wasser (d.h. der Film ist nur teilweise vernetzt) auf den porösen Träger übertragen, wo es zu einer Nachvernetzung kommt. Man kann aber auch warten, bis der Film vollständig vernetzt ist und ihn erst dann auf die Trägermembran bringen. Die Membran kann anschließend getrocknet werden, z.B. bei 20 bis 160°C 2 Minuten bis 5 Stunden, bevorzugt bei 40 bis 70°C 1 bis 30 Minuten.

Man kann mit diesem Verfahren die verschiedensten Trägermaterialien und -formen beschichten. Es lassen sich sowohl planare Membranen als auch Hohlfasermembran mit Einfachschichten oder auch Mehrfachschichten übereinander beschichten. Das Water-Casting-Verfahren läßt sich für diskontinuierliche oder auch für eine kontinuierliche Beschichtung einsetzen, bei der z.B. Rollenmaterial von Flach- oder Hohlfasermembranen beschichtet und das Beschichtungsmaterial kontinuierlich nachgeliefert wird.

Die so erhaltene Verbundmembran besteht aus einer porösen Trägermembran, auf der eine vernetzte permselektive Polymerschicht, insbesondere eine vernetzte Polysiloxanschicht angeordnet ist. Insbesondere zeichnet sich die vernetzte Polysiloxanschicht dadurch aus, daß sie Einheiten der Formel (I), (II) oder (III) enthält 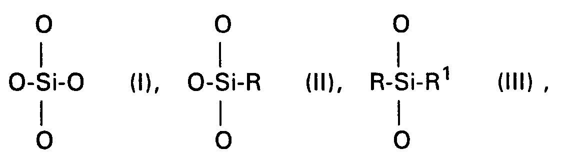
wobei R und R¹ unabhängig voneinander eine Alkylgruppe (insbesondere mit 1 bis 3 C-Atomen), eine Phenyl- oder eine Vinylgruppe bedeuten.

Die erfindungsgemäße Verbundmembran kann auch als Träger für eine weitere permselektive Schicht eingesetzt werden. Dabei wird insbesondere die vernetzte Polymerschicht, vorzugsweise die vernetzte Polysiloxanschicht, von Trägermembran und aufgetragener permselektiver Schicht eingehüllt. Die vernetzte Polymerschicht, insbesondere die vernetzte Polysiloxanschicht, dient hier als Gutter-Layer zur Verbesserung der Gesamtdurchlässigkeit und als glatte, defektfreie Unterlage für eine weitere permselektive Schicht.

Die so erhaltene Membran kann insbesondere Gesamt-Schichtdicken zwischen 10 und 5000 nm haben. Sie hat meist eine Durchlässigkeit für Sauerstoff von 0,1 bis 4 m³ (STP)/m²h·bar und eine Selektivität Sauerstoff/Stickstoff von 1,9 bis 3. Sie ist beständig gegen Lösungsmittel (wie z.B. Alkohole), und kann somit in lösungsmittelhaltiger Atmosphäre und zur Pervaporation eingesetzt werden.

Die Erfindung wird durch die Beispiele näher erläutert.

### Beispiel 1:

Zu einer Lösung aus 1 ml Polydimethylsiloxan (mit 2 endständigen Si-OH-Gruppen) und 5 ml Butylacetat werden 0,3 ml einer 50 %igen Methyltriacetoxysilanlösung in Butylacetat und 0,1 ml einer 5 %igen Dibutylzinndilauratlösung in Butylacetat gegeben. 50 µl dieser Lösung werden auf eine Wasseroberfläche (300 cm²) gespreitet. Nach 1 Minute bei 40°C Wassertemperatur vernetzt der Film und wird auf der Wasseroberfläche zähelastisch. Anschließend wird er auf einen Träger (®Celgard 2400) übertragen und bei 50°C 30 Minuten im Trockenschrank getrocknet. Die anschließende Permeanzmessung und Trennfaktorbestimmung ergibt eine Sauerstoffpermeanz von 2 bis 4 m³ (STP)/m²h·bar und einen Trennfaktor von 1,9 bis 2,1 zu Stickstoff.

### Beispiel 2:

Zu einer Lösung aus 1 ml OH-term. Polydimethyldiphenylsiloxan-Copolymer und 5 ml Butylacetat werden 0,3 ml einer 50 %igen Methyltriacetoxysilanlösung in Butylacetat und 0,1 ml einer 5 %igen Dibutylzinndilauratlösung in Butylacetat gegeben. 50 µl dieser Lösung werden auf eine Wasseroberfläche (300 cm²) gespreitet. Nach 40 Sekunden bei 40°C Wassertemperatur vernetzt der Film und wird auf der Wasseroberfläche zähelastisch. Anschließend wird er auf einen Träger (®Celgard 2400) übertragen und bei 70°C 15 Minuten im Trockenschrank getrocknet. Die anschließende Permeanzmessung und Trennfaktorbestimmung ergibt eine Sauerstoffpermeanz von 0,5 bis 1 m³ (STP)/m²h·bar und einen Trennfaktor von 2,4 bis 2,6 zu Stickstoff.

### Beispiel 3:

Zu einer Lösung aus 1 ml OH-term. Polydimethylsiloxan und 5 ml Butylacetat werden 0,7 ml einer 10 %igen Phenylmethylsilikonharzlösung in Butylacetat, 0,3 ml einer 50 %igen Methyltriacetoxysilanlösung in Butylacetat und 0,1 ml einer 5 %igen Dibutylzinndilauratlösung in Butylacetat gegeben. 50 µl dieser Lösung werden auf eine Wasseroberfläche (300 cm²) gespreitet. Nach 2 Minuten bei Raumtemperatur (22°C) vernetzt der Film und wird auf der Wasseroberfläche zähelastisch. Anschließend wird er auf einen Träger (®Celgard 2400) übertragen. Die anschließende Permeanzmessung und Trennfaktorbestimmung ergibt eine Sauerstoffpermeanz von 2 bis 4 m³ (STP)/m²h·bar und einen Trennfaktor von 1,9 bis 2,3 zu Stickstoff.

### Beispiel 4:

Zu einer Lösung aus 1 ml OH-term. Polydimethylsiloxan und 5 ml Butylacetat werden 0,3 ml einer 50 %igen Methyltriacetoxysilanlösung in Butylacetat, 0,03 ml einer 10 %igen Glycidoxypropyltriethyoxysilanlösung in Butylacetat und 0,1 ml einer 5 %igen Dibutylzinndilauratlösung in Butylacetat gegeben. 200 µl dieser Lösung werden auf eine Wasseroberfläche (300 cm²) gespreitet. Nach 1 Minute bei 40°C Wassertemperatur vernetzt der Film und wird auf der Wasseroberfläche zähelastisch. Anschließend wird er auf einen Träger (®Celgard 2400) übertragen und bei 50°C 30 Minuten im Trockenschrank getrocknet. Die anschließende Permeanzmessung und Trennfaktorbestimmung ergibt eine Sauerstoffpermeanz von 0,5 bis 1 m³ (STP)/m²h·bar und einen Trennfaktor von 1,9 bis 2,3 zu Stickstoff.

### Beispiel 5:

Zu einer Lösung aus 1 ml OH-term. Polydimethylsiloxan und 5 ml Butylacetat werden 0,3 ml einer 50 %igen Methyltriacetoxysilanlösung in Butylacetat und 0,1 ml einer 5 %igen Dibutylzinndilauratlösung in Butylacetat gegeben. 50 µl dieser Lösung werden auf eine Wasseroberfläche (300 cm²) gespreitet. Nach 1 Minute bei 40°C Wassertemperatur vernetzt der Film und wird auf der Wasseroberfläche zähelastisch. Anschließend wird er auf einen Träger (®Celgard 2400) übertragen und bei 50°C 30 Minuten im Trockenschrank getrocknet. In einem nachfolgenden Beschichtungsvorgang wird die Membran mit einem löslichen teilfluorierten Polyimid aus 2,2-Bis(3,4-dicarboxyphenyl)hexafluorpropandianhydrid und 2,2-Bis(3-aminophenyl)hexafluorpropan (P.E. Cassidy et al., J. Macromolec. Sci. Rev. Macromol. Chem. Phys, C29, 365 (1989), Verbindung XXXIV) beschichtet.

Dazu wird eine Lösung aus 50 mg dieses Polyimids in 1 ml Chlorbenzol und 4 ml Dichlormethan bereitet. Davon werden 50 µl auf eine Wasseroberfläche (300 cm²) bei einer Temperatur von 30°C gespreitet (Water-casting-Verfahren). Nach Verdampfen des Lösungsmittels wird der Film auf die Membran übertragen und bei 40°C 30 Minuten im Trockenschrank getrocknet. Die anschließende Permeanzmessung und Trennfaktorbestimmung dieser Kompositmembran ergibt eine Sauerstoffpermeanz von 0,1 bis 0,2 m³ (STP)/m²h·bar und einen Trennfaktor von 5,5 bis 6,0 zu Stickstoff.

### Beispiel 6:

Zu einer Lösung aus 1 ml (Acryloxypropyl)Methylsiloxan Copolymer (15 bis 20 % Acryloxypropylanteil) und 1 ml Butylacetat werden 0,05 ml Ethylbenzoin gegeben. 300 µl dieser Lösung wird auf eine Wasseroberfläche (300 cm²) gespreitet. Die Atmosphäre über dem Film wird mit Stickstoff überspült. Der Film wird auf der Wasserfläche mit Hilfe einer Hg-Hochdrucklampe bestahlt und vernetzt. Anschließend wird er auf einen Träger (®Celgard 2400) übertragen. Die anschließende Permeanzmessung und Trennfaktorbestimmung der Membran ergibt eine Sauerstoffpermeanz von 0,5 bis 1 m³ (STP)/m²h·bar und einen Trennfaktor von 1,9 bis 2,1 zu Stickstoff.

### Beispiel 7

Zu einer Lösung aus 1 ml OH-term- Polydimethylsiloxan und 5 ml Butylacetat werden 0,3 ml einer 50 %igen Methyltriacetoxysilanlösung in Butylacetat und 0,1 ml einer 5 %igen Dibutylzinndilauratlösung in Butylacetat gegeben. 50 µl dieser Lösung werden auf eine Wasseroberfläche gespreitet. Nach 1 Minute bei 30°C Wassertemperatur wird der Film auf der Wasseroberfläche zähelastisch. Anschließend wird er auf einen Träger (^{®}Celgard 2400) übertragen. In einem nachfolgenden Beschichtungsvorgang wird die Membran mit einem löslichen teilfluorierten Polyimid aus 2,2-Bis(3,4-dicarboxyphenyl)hexafluorpropandianhydrid und 2,2-Bis(3-aminophenyl)hexafluorpropan (P. E. Cassidy et al., J. Macromolec. Sci. Rev. Macromol. Chem. Phys, C29, 365 (1989), Verbindung XXXIV) beschichtet. Dazu wird eine Lösung aus 50 mg dieses Polyimids in 1 ml Chlorbenzol und 4 ml Dichlormethan bereitet. Davon werden 50 µl auf eine Wasseroberfläche (300 cm²) bei einer Temperatur von 30°C gespreitet. Nach Verdampfen des Lösungsmittels wird der Film auf die Membran übertragen. In einem weiteren Beschichtungsvorgang werden zu einer Lösung aus 1 ml OH-term. Polydimethylsiloxan und 5 ml Butylacetat 0,3 ml einer 50 %igen Methyltriacetoxysilanlösung in Butylacetat und 0,1 ml einer 5 %igen Dibutylzinndilauratlösung in Butylacetat gegeben. 200 µl dieser Lösung werden auf eine Wasseroberfläche gespreitet. Nach 1 Minute wird er auf die Membran übertragen und bei 50°C 30 Minuten im Trockenschrank getrocknet. Die anschließende Permeanzmessung und Trennfaktorbestimmung dieser Kompositmembran ergibt eine Sauerstoffpermeanz von 0,1 bis 0,2 m³ (STP)/m²hbar und einen Trennfaktor von 5,5 bis 6,0 zu Stickstoff.

## Patentansprüche

1. Verfahren zur Herstellung einer Verbundmembran, dadurch gekennzeichnet, daß man die Lösung eines Polymeren in einem flüchtigen organischen Lösungsmittel auf Wasser spreitet, man das Lösungsmittel verdunsten läßt, das Polymere vernetzt und den entstehenden Polymer-Film auf eine Trägermembran überträgt.

2. Verfahren nach Anspruch 1, dadurch gekennzeichnet, daß das Polymere ein Polysiloxan ist.

3. Verfahren gemäß Anspruch 2, dadurch gekennzeichnet, daß man das Polysiloxan über polymergebundene OH-Gruppen vernetzt.

4. Verfahren nach Anspruch 3, dadurch gekennzeichnet, daß man als Vernetzter ein bi-, tri- oder tetrafunktionelles Silan mit hydrolysierbaren SiO-Bindungen verwendet.

5. Verfahren nach Anspruch 4, dadurch gekennzeichnet, daß man Triacetoxymethylsilan als Vernetzer einsetzt.

6. Verfahren nach Anspruch 3, dadurch gekennzeichnet, daß man die Vernetzung in Gegenwart eines Katalysators durchführt.

7. Verfahren nach Anspruch 6, dadurch gekennzeichnet, daß man Zinnsalze als Katalysator verwendet.

8. Verfahren nach Anspruch 1 oder 2, dadurch gekennzeichnet, daß man ein Polymer, das olefinische Doppelbindungen aufweist, durch Strahlung vernetzt.

9. Verbundmembran enthaltend mindestens eine Polymerschicht auf einer porösen Trägermembran, dadurch gekennzeichnet, daß die Polymerschicht von einer Wasseroberfläche auf den Träger übertragen wurde und vernetzt ist.

10. Verbundmembran nach Anspruch 9, dadurch gekennzeichnet, daß die Polymerschicht als Schutzschicht dient.

11. Verbundmembran gemäß Anspruch 9, dadurch gekennzeichnet, daß die Polymerschicht ein Polysiloxan ist.

12. Verbundmembran gemäß Anspruch 11, dadurch gekennzeichnet, daß die vernetzte Polysiloxanschicht Einheiten der Formel 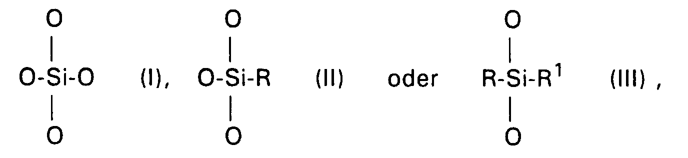 enthält, wobei R und R₁ unabhängig voneinander eine Alkyl-, Phenyl- oder Vinylgruppe bedeuten.

13. Verbundmembran nach Anspruch 9, dadurch gekennzeichnet, daß die Polymerschicht über polymergebundene OH-Gruppen vernetzt ist.

14. Verbundmembran nach Anspruch 9, dadurch gekennzeichnet, daß die Silikonschicht mit Strahlen vernetzt ist.

15. Verwendung der Membran gemäß Anspruch 9 zur Gastrennung, Pervaporation oder Dampfpermeation.

16. Verwendung der Verbundmembran gemäß Anspruch 9 als Träger für eine permselektive Schicht.
